# EUROPEAN PATENT SPECIFICATION

(11) **EP 2 031 201 B1**
(45) Date of publication and mention of the grant of the patent: **23.02.2011**
(21) Application number: 07744449.5
(22) Date of filing: 24.05.2007
(51) Int. Cl.: F01N 3/20, B01D 53/94, F01N 3/08, F01N 3/28, F01N 3/36, F02D 45/00

(54) **EXHAUST EMISSION PURIFICATION SYSTEM OF INTERNAL COMBUSTION ENGINE**
ABGASEMISSIONSREINIGUNGSSYSTEM FÜR VERBRENNUNGSMOTOR
SYSTÈME DE PURIFICATION D'ÉMISSION DE GAZ D'ÉCHAPPEMENT D'UN MOTEUR À COMBUSTION INTERNE

(30) Priority: 24.05.2006 JP 2006143939
(43) Date of publication of application: 04.03.2009
(73) Proprietor: TOYOTA JIDOSHA KABUSHIKI KAISHA, Aichi-ken, 471-8571 (JP)
(72) Inventor: TSUKAMOTO, Yoshihisa, Toyota-shi, Aichi 471-8571 (JP); OHASHI, Nobumoto, Toyota-shi, Aichi 471-8571 (JP); HIROTA, Shinya, Toyota-shi, Aichi 471-8571 (JP); ASANUMA, Takamitsu, Toyota-shi, Aichi 471-8571 (JP)
(74) Representative: Kuhnen & Wacker
(86) International application number: PCT/JP2007/061038
(87) International publication number: WO 2007/136143

(56) References cited:
- EP-A2- 1 331 374
- FR-A1- 2 834 531
- JP-A- 09 096 215
- JP-A- 11 229 859
- JP-A- 2004 324 477
- JP-A- 2004 324 477
- US-A- 6 158 212

## Description

### TECHNICAL FIELD

The present invention relates to an exhaust gas purification system for an internal combustion engine which includes an NOx storage-reduction catalyst arranged on an exhaust passage of the internal combustion engine, and a precatalyst that is arranged on an exhaust passage at a location upstream of the NOx storage-reduction catalyst and has an oxidation function.

### PRIOR ART

In Japanese patent application laid-open No. JP 2000-310113 A, there is disclosed an exhaust gas purification system for an internal combustion engine which includes an exhaust gas purification catalyst that is arranged on an exhaust passage of the internal combustion engine, and an adsorption means that is arranged on the exhaust passage at a location downstream of the exhaust gas purification catalyst and adsorbs prescribed components of an exhaust gas, wherein the degradation of the exhaust gas purification catalyst is determined based on an amount of the prescribed components adsorbed by the adsorption means.

Also, in Japanese patent application laid-open No. JP 2001-342879 A, there is disclosed an exhaust gas purification system for an internal combustion engine which includes an NOx storage-reduction catalyst (hereinafter simply referred to as a NOx catalyst) that is arranged on an exhaust passage of the internal combustion engine, and a precatalyst that is arranged on the exhaust passage at a location upstream of the NOx catalyst and has an oxidation function, wherein when the NOx occluded in the NOx catalyst is reduced, the air fuel ratio of an exhaust gas is controlled in accordance with the level of degradation of the precatalyst.

Japanese patent application laid-open No. JP 2004-324477 A further discloses an exhaust emission control system for an internal combustion engine in which a difference in temperature between the temperature of the exhaust gas flowing out of the NOₓ catalyst and the temperature of the exhaust gas flowing in the NOₓ catalyst is detected or estimated. When an amount of fuel to be added in adding the fuel to the exhaust gas by the control for adding the fuel to the exhaust gas to make the temperature of the exhaust gas coincide with the prescribed temperature of the exhaust gas exceeds the prescribed amount to be added and the detected or estimated difference in temperature of the exhaust gas is not less than the prescribed temperature difference, it is determined that the oxidizing function of the upstream exhaust emission control catalyst is deteriorated.

### DISCLOSURE OF THE INVENTION

The present invention is intended to provide a technique which can detect the level of degradation of a precatalyst in an exhaust gas purification system for an internal combustion engine that includes a NOx catalyst arranged on an exhaust passage of the internal combustion engine, and the precatalyst arranged on the exhaust passage at a location upstream of the NOx catalyst and having an oxidation function.

The present invention detects the level of degradation of the precatalyst based on the temperature change width of the NOx catalyst at the time when a reducing agent is intermittently supplied from an upstream side of the precatalyst to the precatalyst and the NOx catalyst.

More specifically, an exhaust gas purification system for an internal combustion engine according to the present invention is characterized by comprising:
an NOx storage-reduction catalyst that is arranged on an exhaust passage of the internal combustion engine,
a precatalyst that is arranged on an exhaust passage at a location upstream of said NOx storage-reduction catalyst and has an oxidation function,
a temperature detecting means that detects the temperature of said NOx storage-reduction catalyst,
a reducing agent supplying means that intermittently supplies a reducing agent to said precatalyst and said NOx storage-reduction catalyst from an upstream side of said precatalyst, and
a degradation level detection means that detects the level of degradation of said precatalyst based on the temperature change width of said NOx storage-reduction catalyst at the time when said reducing agent is intermittently supplied by said reducing agent supplying means.

When the level of degradation of the precatalyst is relatively low, the oxidation of the reducing agent supplied from the reducing agent supplying means is liable to be facilitated in the precatalyst. When the reducing agent is oxidized in said precatalyst, the temperature of the precatalyst rises due to the oxidation heat, and at the same time the temperature of the NOx catalyst rises, too. In case where the oxidation of the reducing agent in the precatalyst is liable to be facilitated, the amount of the reducing agent and the amount of oxygen in the exhaust gas which reach up to the NOx catalyst become relatively small. Therefore, the amount of the reducing agent oxidized in the NOx catalyst necessarily decreases. As a result, the amount of oxidation heat generated due to the oxidation of the reducing agent in the NOx catalyst decreases. Accordingly, in case where the level of degradation of the precatalyst is relatively low, the temperature itself of the NOx catalyst rises higher when the intermittent supply of the reducing agent is executed by the reducing agent supplying means as compared with the time when the supply of said reducing agent is not executed, but the temperature change width of the NOx catalyst during the time when the reducing agent is intermittently supplied becomes small.

On the other hand, when the level of degradation of the precatalyst is relatively high, the reducing agent supplied from the reducing agent supplying means is difficult to be oxidized in the precatalyst. Thus, the temperature of the precatalyst is also difficult to rise. In such a case, the amount of the reducing agent and the amount of oxygen in the exhaust gas which reach up to the NOx catalyst become relatively large. As a result, the amount of oxidation heat generated due to the oxidation of the reducing agent in the NOx catalyst increases. Accordingly, a difference in temperature of the NOx catalyst between the times when the reducing agent is supplied to the NOx catalyst and when it is not supplied becomes large. In other words, when the level of degradation of the precatalyst is relatively high, the temperature change width of the NOx catalyst during the time when the reducing agent is intermittently supplied from the reducing agent supplying means becomes large.

In this manner, the temperature change width of the NOx catalyst at the time when the reducing agent is intermittently supplied by the reducing agent supplying means varies according to the level of degradation of the precatalyst. Accordingly, the level of degradation of the precatalyst can be detected based on the temperature change width of the NOx catalyst at this time.

The reducing agent becomes less liable to be oxidized in the precatalyst in accordance with the increasing level of degradation of the precatalyst. Thus, the temperature of the precatalyst becomes difficult to rise, and the amount of the reducing agent and the amount of oxygen in the exhaust gas, which reach the NOx catalyst when the reducing agent is supplied by the reducing agent supplying means, increase. Accordingly, when the reducing agent is intermittently supplied by the reducing agent supplying means, the temperature of the NOx catalyst at the time when the reducing agent is not supplied becomes lower and the temperature of the NOx catalyst when the reducing agent is supplied becomes higher, in accordance with the increasing level of degradation of the precatalyst.

Accordingly, in the present invention, it can be determined that the larger the temperature change width of the NOx catalyst at the time when the reducing agent is intermittently supplied by the reducing agent supplying means, the higher the level of degradation of the precatalyst is.

In the present invention, a NOx reduction control execution means that executes NOx reduction control for reducing the NOx occluded in the NOx catalyst by intermittently supplying the reducing agent by means of the reducing agent supplying means may further be provided.

As stated above, the higher the level of degradation of the precatalyst, the more the amount of the reducing agent and the amount of oxygen in the exhaust gas become, which can reach the NOx catalyst when the reducing agent is supplied by the reducing agent supplying means. In this case, there is fear that even if the reducing agent is supplied so as to reduce the NOx occluded in the NOx catalyst, the efficiency of NOx reduction control might decrease because of the oxidation reaction of the reducing agent also occurring with the reduction reaction of NOx in the NOx catalyst.

Accordingly, in the above case, a precatalyst temperature raising means that serves to make the temperature of the precatalyst higher, in case where the temperature change width of the NOx catalyst at the time when the reducing agent is intermittently supplied by the reducing agent supplying means (hereinafter simply referred to as the temperature change width of the NOx catalyst) is equal to or larger than a predetermined change width when the NOx reduction control is executed by the NOx reduction control execution means, than in case where the temperature change width of the NOx catalyst is less than the predetermined change width may further be provided.

Here, the predetermined change width is a threshold value with which it can be determined that the degradation of the precatalyst has progressed to such an extent that the efficiency of NOx reduction control is lowered excessively.

The oxidation of the reducing agent in the precatalyst can be facilitated by raising the temperature of the precatalyst. That is, the amount of the reducing agent and the amount of oxygen in the exhaust gas, which reach up to the NOx catalyst, can be decreased.

Thus, according to the above, the efficiency decrease of the NOx reduction control can be suppressed even in a state where the degradation of the precatalyst has progressed.

In addition, in the above case, the larger the temperature change width of the NOx catalyst, the higher a target temperature at the time when the temperature of the precatalyst is raised by the precatalyst temperature raising means may be made.

According to this, even if the level of degradation of the precatalyst becomes much higher, it is possible to facilitate the oxidation of the reducing agent in the precatalyst.

In the above case, the target temperature is set in accordance with the temperature change width of the NOx catalyst, i.e., in accordance with the level of degradation of the precatalyst. However, when the degradation of the precatalyst has progressed to an excessive extent, it becomes difficult to oxidize the reducing agent in the precatalyst to a satisfactory extent even if the temperature of the precatalyst is caused to rise.

Accordingly, in case where the temperature of the precatalyst is caused to rise, as stated above, a predetermined upper limit value may be set for the target temperature, so that the NOx reduction control of the NOx reduction control execution means can be inhibited from being executed when the target temperature set in accordance with the temperature change width of the NOx catalyst becomes higher than the predetermined upper limit value.

Here, note that the predetermined upper limit value is a temperature equal to or lower than a threshold with which it can be determined that the degradation of the precatalyst has progressed to such an extent that it is difficult to oxidize the reducing agent in the precatalyst to a satisfactory extent even if the temperature of the precatalyst is caused to rise, when the target temperature is set to a value higher than the predetermined upper limit value.

According to the above, it is possible to suppress the NOx reduction control from being executed in a state where it is difficult to reduce the NOx occluded in the NOx catalyst.

### BRIEF DESCRIPTION OF THE DRAWINGS

Fig. 1 is a view showing the schematic construction of intake and exhaust systems of an internal combustion engine according to an embodiment of the present invention.
Fig. 2 is a view showing the temperature change of a NOx catalyst when intermittent addition of fuel from a fuel addition valve is executed.
Fig. 3 is a flow chart illustrating a routine for NOx reduction control according to the embodiment.

### BEST MODE FOR CARRYING OUT THE INVENTION

### (Embodiment 1)

Hereinafter, a specific embodiment of an exhaust gas purification system for an internal combustion engine according to the present invention will be described while referring to the drawings.

### <Schematic Construction of Intake and Exhaust Systems of an Internal Combustion Engine>

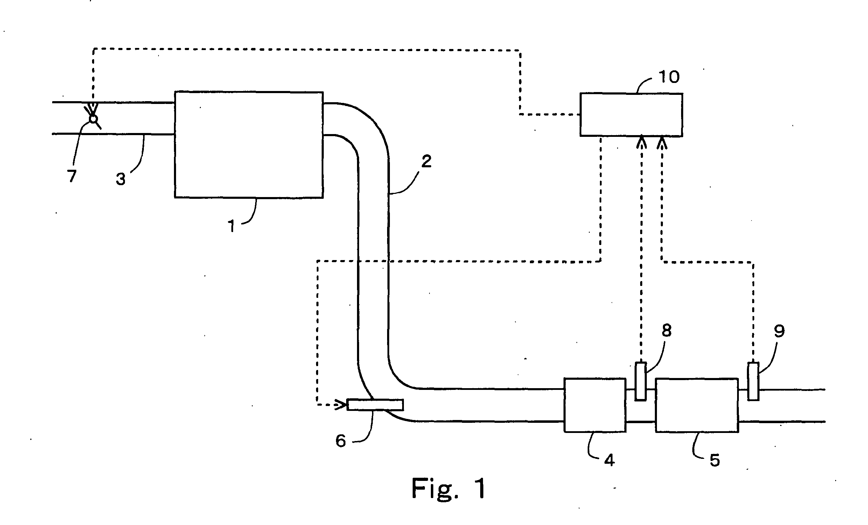

Here, reference will be made, by way of example, to a case where the present invention is applied to a diesel engine used for driving a vehicle. Fig. 1 is a view that shows the schematic construction of intake and exhaust systems of an internal combustion engine according to an embodiment of the present invention.

The internal combustion engine 1 is the diesel engine for driving the vehicle. An intake passage 3 and an exhaust passage 2 are connected with this internal combustion engine 1. A throttle valve 7 is arranged on the intake passage 3. An oxidation catalyst 4 and a NOx catalyst 5 are arranged on the exhaust passage 2.

The NOx catalyst 5 is a catalyst that serves to occlude NOx in an exhaust gas when the surrounding atmosphere is an oxidative atmosphere, and to reduce the NOx thus occluded when the surrounding atmosphere is a reductive atmosphere. The NOx catalyst 5 is arranged on the exhaust passage 2 at a location downstream of the oxidation catalyst 4. Here, note that in this embodiment, the oxidation catalyst 4 corresponds to a precatalyst according to the present invention. The precatalyst needs only to be a catalyst having an oxidation function, and for example, the oxidation catalyst 4 may be a NOx catalyst, and the NOx catalyst 5 may be a particulate filter having the NOx catalyst carried thereon.

A fuel addition valve 6 for adding fuel as a reducing agent to the exhaust gas is arranged on the exhaust passage 2 at an upstream side of the oxidation catalyst 4. In the present invention, the fuel addition valve 6 corresponds to a reducing agent supplying means.

Further, a first temperature sensor 8 and a second temperature sensor 9, which detect the temperature of the exhaust gas are arranged on the exhaust passage 2 at a location between the oxidation catalyst 4 and the NOx catalyst 5 and at a location downstream of the NOx catalyst 5, respectively.

An electronic control means (ECU) 10 for controlling the internal combustion engine 1 is provided in conjunction with the internal combustion engine 1 as constructed in the above-described manner. The first temperature sensor 8 and the second temperature sensor 9 are electrically connected to the ECU 10, and output signals of these sensors are input to the ECU 10. The ECU 10 estimates the temperature of the oxidation catalyst 4 based on the output value of the first temperature sensor 8, and estimates the temperature of the NOx catalyst 5 based on the output value of the second temperature sensor 9. In this embodiment, the second temperature sensor 9 corresponds to a temperature detection means according to the present invention.

In addition, the throttle valve 7 and the fuel addition valve 6 are electrically connected to the ECU 10, so that these valves are controlled by the ECU 10.

### <NOx Reduction Control

In this embodiment, NOx reduction control is performed so as to reduce the NOx occluded in the NOx catalyst 5. The NOx reduction control according to this embodiment is executed by intermittently adding fuel from the fuel addition valve 6 at the time when the temperature of the NOx catalyst 5 is an activation temperature. Fuel is supplied to the NOx catalyst 5 by the fuel being added from the fuel addition valve 6. As a result, the air fuel ratio in the surrounding atmosphere of the NOx catalyst 5 decreases, whereby the surrounding atmosphere becomes a reduction atmosphere, so the NOx occluded in the NOx catalyst 5 is reduced. In addition, the excessive temperature rise of the oxidation catalyst 4 and the NOx catalyst 5 can be suppressed by intermittently performing the addition of fuel from the fuel addition valve 6.

### <Degradation Level Detection Method for Oxidation Catalyst>

The NOx reduction control is performed by intermittently adding fuel from the fuel addition valve 6, as stated above. At this time, the fuel added from the fuel addition valve 6 is supplied to the oxidation catalyst 4 before it reaches the NOx catalyst 5.

The fuel supplied to the oxidation catalyst 4 is oxidized in the oxidation catalyst 4. The oxygen in the exhaust gas is consumed due to the oxidation of fuel in the oxidation catalyst 4, so the amount of oxygen in the exhaust gas, which reaches the NOx catalyst 5, is decreased. Therefore, the air fuel ratio in the surrounding atmosphere of the NOx catalyst 5 becomes liable to decrease.

However, as the degradation of the oxidation catalyst 4 progresses, fuel becomes less liable to be oxidized in the oxidation catalyst 4. Accordingly, when fuel is added from the fuel addition valve 6, the amount of the fuel that reaches up to the NOx catalyst 5 increases, and at the same time the amount of oxygen in the exhaust gas that reaches up to the NOx catalyst 5 increases, too. As a result, the reduction reaction of NOx and the oxidation reaction of fuel occur in the NOx catalyst 5, thus giving rise to a fear that the efficiency of NOx reduction control might decrease.

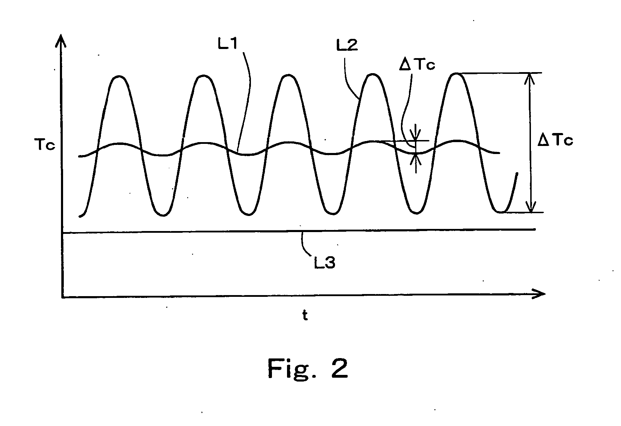

Therefore, in this embodiment, the level of degradation of the oxidation catalyst 4 is detected at the time of the execution of the NOx reduction control. Here, reference will be made to a method for detecting the level of degradation of the oxidation catalyst 4 according to this embodiment. Fig. 2 is a view that shows the temperature change of the NOx catalyst 5 at the time when intermittent addition of fuel from the fuel addition valve 6 is executed. In Fig. 2, the axis of ordinate represents the temperature Tc of the NOx catalyst 5, and the axis of abscissa represents time t.

In addition, in Fig. 2, a curve L1 denotes the temperature change of the NOx catalyst 5 at normal times, i.e., at the time when the degradation of the oxidation catalyst 4 is relatively low, and a curve L2 denotes the temperature change of the NOx catalyst 5 in a state where the degradation of the oxidation catalyst 4 progresses to some extent, i.e., at the time when the degradation of the oxidation catalyst 4 is relatively high. Also, a straight line L3 denotes the temperature of the exhaust gas that flows through the exhaust passage 2 upstream of the oxidation catalyst 4.

When fuel is intermittently added from the fuel addition valve 6 with the level of degradation of the oxidation catalyst 4 being relatively low, the most of the added fuel is oxidized in the oxidation catalyst 4. When the fuel is oxidized in the oxidation catalyst 4, the temperature of the oxidation catalyst 4 rises due to the heat of oxidation, and at the same time the temperature of the NOx catalyst 5 rises, too. In case where the oxidation of the fuel in the oxidation catalyst 4 is liable to be facilitated, the amount of fuel and the amount of oxygen in the exhaust gas, which reach up to the NOx catalyst 5, become relatively small. Therefore, the amount of the fuel oxidized in the NOx catalyst 5 necessarily decreases. As a result, the amount of oxidation heat generated due to the oxidation of the fuel in the NOx catalyst 5 decreases. Accordingly, in case where the intermittent addition of fuel from the fuel addition valve 6 is performed with the level of degradation of the oxidation catalyst 4 being relatively low, the temperature of the NOx catalyst 5 itself rises higher as compared with the case where the addition of fuel is not executed, as shown by L1 in Fig. 2, but the temperature change width ΔTc of the NOx catalyst 5 in the course of the intermittent addition of fuel (hereinafter simply referred to as the temperature change width ΔTc of the NOx catalyst 5) becomes small.

On the other hand, when the level of degradation of the oxidation catalyst 4 is relatively high, the fuel added from the fuel addition valve 6 is difficult to be oxidized in the oxidation catalyst 4. Therefore, even if the intermittent addition of fuel from the fuel addition valve 6 is executed, the temperature of the oxidation catalyst 4 is difficult to rise. Accordingly, the temperature rise of the NOx catalyst 4 in accordance with the temperature rise of the oxidation catalyst 4 becomes small, too. In such a case, the amount of the fuel and the amount of oxygen in the exhaust gas, which reach up to the NOx catalyst 5, are relatively large. As a result, the amount of oxidation heat generated due to the oxidation of the fuel in the NOx catalyst 5 increases. Accordingly, a difference in temperature of the NOx catalyst 5 between the times when fuel is supplied to the NOx catalyst 5 and when it is not supplied becomes large. In other words, when the intermittent addition of fuel from the fuel addition valve 6 is performed with the level of degradation of the oxidation catalyst 4 being relatively high, the temperature change width ΔTc of the NOx catalyst 5 becomes large, as shown by L2 in Fig. 2.

As can be seen from the foregoing description, the higher the level of degradation of the oxidation catalyst 4, the larger the temperature change width ΔTc of the NOx catalyst 5 at the time when fuel is intermittently added from the fuel addition valve 6 becomes. Accordingly, in this embodiment, the level of degradation of the oxidation catalyst 4 is detected based on the temperature change width ΔTc at the time of the execution of the NOx reduction control. Such detection of the level of degradation of the oxidation catalyst 4 is carried out by the ECU 10. In this embodiment, the ECU 10, which performs the detection of the level of degradation of the oxidation catalyst 4, corresponds to a degradation level detection means according to the present invention.

### <Temperature Raising Control on the Oxidation Catalyst>

In addition, in this embodiment, when it can be determined that the degradation of the oxidation catalyst 4 has progressed to some extent, the temperature of the oxidation catalyst 4 is controlled to rise so as to facilitate the oxidation of fuel in the oxidation catalyst 4 at the time of the execution of the NOx reduction control.

Even in case where the degradation of the oxidation catalyst 4 has progressed to some extent, the oxidation of fuel in the oxidation catalyst 4 can be facilitated by raising the temperature of the oxidation catalyst 4. As a result, the amount of fuel and the amount of oxygen in the exhaust gas that reach up to the NOx catalyst 5 can be decreased. Accordingly, a decrease in the efficiency of the NOx reduction control can be suppressed.

As the temperature raising control of the oxidation catalyst 4, there can be exemplified the control of performing auxiliary fuel injection on the expansion stroke in the internal combustion engine 1, the control of decreasing the degree of opening of the throttle valve 7, and so on. According to these, the temperature of the exhaust gas discharged from the internal combustion engine 1 is raised, in accordance with which the temperature of the oxidation catalyst 4 is raised. In addition, in case where an EGR device is provided for introducing a part of the exhaust gas flowing through the exhaust passage 2 into the intake passage 3, the exhaust gas discharged from the internal combustion engine 1 may be raised in temperature by increasing the amount of the exhaust gas introduced into the intake passage 3, as a result of which the temperature of the oxidation catalyst 4 can be raised.

Also, as the temperature raising control of the oxidation catalyst 4, there can be exemplified the control of performing auxiliary fuel injection on the exhaust stroke in the internal combustion engine 1. In this case, fuel, which is facilitated to be atomized by being injected according to the auxiliary fuel injection, is supplied to the oxidation catalyst 4, and the temperature of the oxidation catalyst 4 is raised due to the oxidation of the fuel being carried out by the oxidation catalyst 4. In addition, by performing the addition of fuel from the fuel addition valve 6 in a more finely subdivided manner than in ordinary or normal fuel addition, or by adding a fuel lighter than the one to be added in normal times, the oxidation of fuel in the oxidation catalyst 4 can be facilitated, thereby making it possible to raise the temperature of the oxidation catalyst 4.

Moreover, a heater may be arranged on the exhaust passage 2, so that the exhaust gas flowing into the oxidation catalyst 4 can be heated or the oxidation catalyst 4 itself can be raised in temperature by the heater.

### <Routine for NOx Reduction Control>

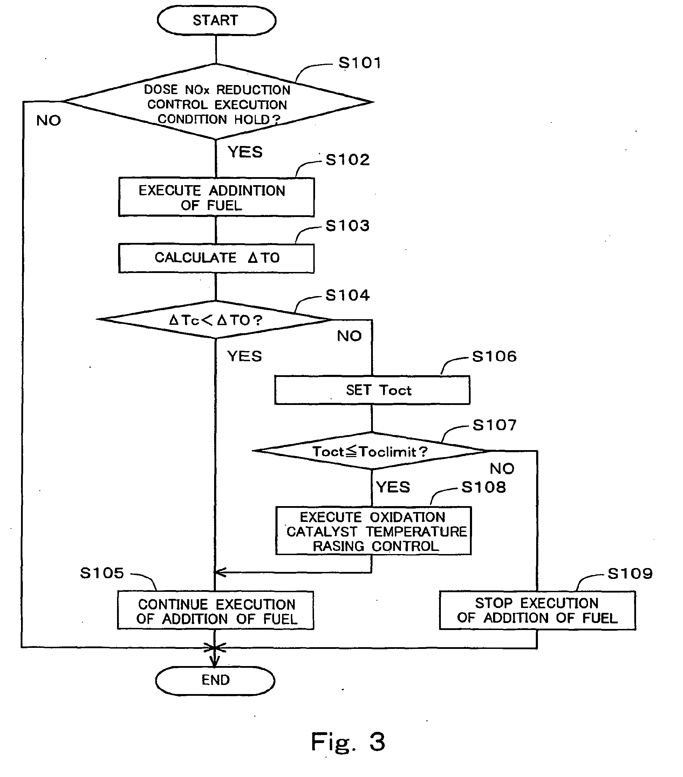

Hereinafter, reference will be made to a routine for the NOx reduction control according to this embodiment based on a flow chart shown in Fig. 3. This routine is beforehand stored in the ECU 10, and is repeated at predetermined time intervals.

In this routine, first in step S101, the ECU 10 determines whether an execution condition for NOx reduction control holds. Here, as the execution condition for NOx reduction control, there can be exemplified a case in which an estimated value of an amount of NOx occlusion in the NOx catalyst 5 is equal to or more than a threshold for the execution of NOx reduction control, and in which the temperatures of the oxidation catalyst 4 and the NOx catalyst 5 are in the range of their activation temperatures. When a negative determination is made in this S101, the ECU 10 terminates this routine once, whereas when a positive determination is made, the ECU 10 proceeds to S102.

In S102, the ECU 10 executes the intermittent addition of fuel from the fuel addition valve 6. The amount of fuel to be added at this time is controlled in such a manner that the air fuel ratio of the exhaust gas flowing into the NOx catalyst 5 when the oxidation catalyst 4 is in an ordinary or normal state, i.e., when the level of degradation of the oxidation catalyst 4 is relatively low, becomes equal to a target air fuel ratio. Here, note that the target air fuel ratio is an air fuel ratio with which the surrounding atmosphere of the NOx catalyst 5 becomes a reductive atmosphere. In addition, the stop interval of the addition of fuel at this time is set so as to be able to suppress an excessive rise in temperature of the oxidation catalyst 4 and the NOx catalyst 5. In this embodiment, the ECU 10 executing this S102 corresponds to the NOx reduction control execution means according to the present invention.

Subsequently, the ECU 10 proceeds to S103, where a predetermined change width ΔT0, which is a temperature change width of the NOx catalyst 5 in the form of a threshold for the degradation determination of the oxidation catalyst 4, is calculated. As stated above, the higher the level of degradation of the oxidation catalyst 4, the larger the temperature change width of the NOx catalyst 5 becomes. In addition, the higher the level of degradation of the oxidation catalyst 4, the lower the efficiency of the NOx reduction control becomes. Here, note that the predetermined change width ΔT0 is a threshold value with which it can be determined that the degradation of the oxidation catalyst 4 has progressed to such an extent that the efficiency of NOx reduction control might be lowered excessively. The predetermined change width ΔT0 is calculated based on the amount of intake air, the amount of injection fuel in the internal combustion engine 1, and the amount of fuel to be added from the fuel addition valve 6.

Then, the ECU 10 proceeds to S104, where it determines whether the temperature change width ΔTc of the NOx catalyst 5 is smaller than the predetermined change width ΔT0 which is calculated in S103. When a positive determination is made in S104, the ECU 10 proceeds to step S105, whereas when a negative determination is made, the ECU 10 proceeds to S106.

The ECU 10 having proceeded to S105 continues to execute the intermittent addition of fuel from the fuel addition valve 6. In other words, the execution of the NOx reduction control is continued. Thereafter, the ECU 10 once terminates the execution of this routine.

On the other hand, the ECU 10 having proceeded to S106 sets a target temperature Toct in the temperature raising control of the oxidation catalyst 4 based on the temperature change width ΔTc of the NOx catalyst 5. Even when the degradation of the oxidation catalyst 4 progresses to such an extent that the temperature change width ΔTc of the NOx catalyst 5 becomes the predetermined change width ΔT0 or more, the oxidation of fuel in the oxidation catalyst 4 can be facilitated by raising the temperature of the oxidation catalyst 4. That is, a decrease in the efficiency of the NOx reduction control can be suppressed. At this time, in order to facilitate the oxidation of fuel in the oxidation catalyst 4 to a satisfactory extent, it is necessary to make the temperature of the oxidation catalyst 4 higher in accordance with the increasing level of degradation of the oxidation catalyst 4. Therefore, in this embodiment, the relation between the temperature change width ΔTc of the NOx catalyst 5 and the target temperature Toct of the oxidation catalyst 4 is beforehand determined in such a manner that the larger the temperature change width ΔTc of the NOx catalyst 5, the higher the target temperature Toct of the oxidation catalyst 4 is set. That is, the higher the level of degradation of the oxidation catalyst 4, the higher the target temperature Toct is set.

Thereafter, the ECU 10 proceeds to S107, where it determines whether the target temperature Toct set in S106 is equal to or less than a predetermined upper limit value Toclimit. When the degradation of the oxidation catalyst 4 has progressed to an excessive extent, it becomes difficult to oxidize the fuel in the oxidation catalyst 4 to a satisfactory extent even if the temperature of the oxidation catalyst 4 is caused to rise. Here, note that the predetermined upper limit temperature Toclimit is a temperature in the form of a threshold with which it can be determined that the degradation of the oxidation catalyst 4 has progressed to such an extent that it is difficult to oxidize the fuel in the oxidation catalyst 4 to a satisfactory extent even if the temperature of the oxidation catalyst 4 is caused to rise, when the target temperature Toct is set to a value higher than the predetermined upper limit temperature Toclimit. When a positive determination is made in S107, the ECU 10 proceeds to step S108, whereas when a negative determination is made, the ECU 10 proceeds to S109.

In S108, the ECU 10 executes the temperature raising control of the oxidation catalyst 4 according to the above-mentioned method, so that the temperature of the oxidation catalyst 4 is raised up to the target temperature Toct. Thereafter, the ECU 10 proceeds to S105. In this embodiment, the ECU 10 executing this S108 corresponds to a precatalyst temperature raising means according to the present invention.

On the other hand, in S109, the ECU 10 determines that it is difficult to reduce the NOx occluded in the NOx catalyst 5 to a satisfactory extent in the NOx reduction control according to this embodiment, and stops the execution of the intermittent addition of fuel from the fuel addition valve 6. In other words, the execution of the NOx reduction control is stopped. Thereafter, the ECU 10 once terminates the execution of this routine.

According to the routine as stated above, when the temperature change width ΔTc of the NOx catalyst 5 is equal to or larger than the predetermined change width ΔT0, i.e., when it is determined that the degradation of the oxidation catalyst 4 has progressed to such an extent that the efficiency of NOx reduction control might be lowered excessively, the temperature raising control of the oxidation catalyst 4 is executed. Accordingly, the decrease in the efficiency of the NOx reduction control can be suppressed even in a state where the degradation of the oxidation catalyst 4 has progressed.

In addition, in the temperature raising control of the oxidation catalyst 4, the oxidation catalyst 4 is raised up to a higher temperature in accordance with the higher level of degradation of the oxidation catalyst 4. As a result, even if the level of degradation of the oxidation catalyst 4 becomes much higher, the oxidation of fuel in the oxidation catalyst 4 can be facilitated.

Moreover, in case where the degradation of the oxidation catalyst 4 progresses to such an extent that it is difficult to oxidize the fuel in the oxidation catalyst 4 to a satisfactory extent even if the temperature of the oxidation catalyst 4 is caused to rise, the execution of the NOx reduction control is stopped. Accordingly, it is possible to suppress the NOx reduction control from being executed in a state where it is difficult to reduce the NOx occluded in the NOx catalyst 5.

Here, note that in the above-mentioned routine, when the ECU 10 proceeds to S109, the execution of the NOx reduction control may be stopped, and at the same time, the driver of the vehicle, on which the internal combustion engine 1 is installed, may be notified that the degradation of the oxidation catalyst 4 has progressed excessively, i.e., the oxidation catalyst 4 is in failure.

Further, in this embodiment, when the temperatures of the oxidation catalyst 4 and the NOx catalyst 5 are in the range of activation temperatures at a timing different from the timing at which NOx reduction control is executed, the intermittent addition of fuel from the fuel addition valve 6 may be executed, and the level of degradation of the oxidation catalyst 4 may be detected based on the temperature change width of the NOx catalyst 5 at this time.

In this case, the detected temperature change width of the NOx catalyst 5 or the level of degradation of the oxidation catalyst 4 is stored in the ECU 10, and at the time of the execution of the NOx reduction control, it is determined, based on the value thus stored, whether the temperature raising control of the oxidation catalyst 4 is to be executed. Further, a target temperature at the time when the temperature raising control of the oxidation catalyst 4 is executed is set based on the stored value.

In addition, when fuel is intermittently added from the fuel addition valve 6 in control operations other than the NOx reduction control, the level of degradation of the oxidation catalyst 4 may be detected based on the temperature change width of the NOx catalyst 5.

Moreover, in this embodiment, fuel in the form of the reducing agent is supplied to the oxidation catalyst 4 and the NOx catalyst 5 by adding the fuel from the fuel addition valve 6 arranged on the exhaust passage 2, but it may be possible to supply fuel to the oxidation catalyst 4 and the NOx catalyst 5 by performing auxiliary fuel injection on the exhaust stroke of the internal combustion engine 1, in place of the addition of fuel from the fuel addition valve 6.

### INDUSTRIAL APPLICABILITY

According to the present invention, in an exhaust gas purification system for an internal combustion engine that includes a NOx catalyst arranged on an exhaust passage of the internal combustion engine, and a precatalyst arranged on the exhaust passage at a location upstream of the NOx catalyst and having an oxidation function, it is possible to detect the level of degradation of the precatalyst.

## Claims

1. An exhaust gas purification system for an internal combustion engine (1), comprising:
an NOx storage-reduction catalyst (5) that is arranged on an exhaust passage (2) of the internal combustion engine (1);
a precatalyst (4) that is arranged on the exhaust passage (2) at a location upstream of said NOx storage-reduction catalyst (5) and has an oxidation function;
a temperature detecting means (9) that detects the temperature of said NOx storage-reduction catalyst (5); and
a reducing agent supplying means (6) that intermittently supplies a reducing agent to said precatalyst (4) and said NOx storage-reduction catalyst (5) from an upstream side of said precatalyst (4);
the exhaust gas purification system being **characterized by** further comprising
a degradation level detection means (10) that detects the level of degradation of said precatalyst (4) based on the temperature change width of said NOx storage-reduction catalyst (5) at the time when said reducing agent is intermittently supplied by said reducing agent supplying means (6).

2. The exhaust gas purification system for an internal combustion engine (1) as set forth in claim 1, **characterized in that**
said degradation level detection means (10) determines that the larger the temperature change width of said NOx storage-reduction catalyst (5) at the time when the reducing agent is intermittently supplied by said reducing agent supplying means (6), the higher the level of degradation of said precatalyst (4) is.

3. The exhaust gas purification system for an internal combustion engine (1) as set forth in claim 1 or 2, **characterized by** comprising:
a NOx reduction control execution means (10) that executes NOx reduction control for reducing the NOx occluded in said NOx storage-reduction catalyst (5) by intermittently supplying the reducing agent by means of said reducing agent supplying means (6); and
a precatalyst temperature raising means (10) that, when NOx reduction control is performed by said NOx reduction control execution means (10), serves to make the temperature of said precatalyst (4) higher, in case where the temperature change width of said NOx storage-reduction catalyst (5) at time when the reducing agent is intermittently supplied by said reducing agent supplying means (6) is equal to or more than a predetermined change width, than in case where the temperature change width of said NOx storage-reduction catalyst (5) is less than said predetermined change width.

4. The exhaust gas purification system for an internal combustion engine (1) as set forth in claim 3, **characterized in that**
the larger the temperature change width of said NOx storage-reduction catalyst (5) at the time when the reducing agent is intermittently supplied by said reducing agent supplying means (6), the higher a target temperature at the time when the temperature of said precatalyst (4) is raised by said precatalyst temperature raising means (10) is made.

5. The exhaust gas purification system for an internal combustion engine (1) as set forth in claim 4, **characterized in that**
the execution of the NOx reduction control by said NOx reduction control execution means (10) is inhibited when said target temperature becomes higher than a predetermined upper limit value.

## Patentansprüche

1. Abgasreinigungssystem für eine Verbrennungskraftmaschine (1), aufweisend:
einen NOx-Speicher-Reduktionskatalysator (5), der in einer Abgasleitung (2) der Verbrennungskraftmaschine (1) angeordnet ist;
einen Vorkatalysator (4), der in der Abgasleitung (2) oberhalb des NOx-Speicher-Reduktionskatalysators (5) angeordnet ist und eine Oxidationsfunktion aufweist;
eine Temperaturerfassungseinrichtung (9), welche die Temperatur des NOx-Speicher-Reduktionskatalysators (5) erfasst; und
eine Reduktionsmittel-Zugabeeinrichtung (6), die, von eine Stelle oberhalb des Vorkatalysators (4), intermittierend ein Reduktionsmittel dem Vorkatalysator (4) und dem NOx-Speicher-Reduktionskatalysator (5) zuführt;
wobei das Abgasreinigungssystem **dadurch gekennzeichnet ist**, das es ferner aufweist:
eine Verschlechterungsgrad-Erfassungseinrichtung (10), welche, basierend auf der Temperaturänderungsweite des NOx-Speicher-Reduktionskatalysators (5) zu dem Zeitpunkt, zu dem das Reduktionsmittel intermittierend durch die Reduktionsmittel-Zugabeeinrichtung zugeführt wird, den Grad der Verschlechterung des Vorkatalysators (4) erfasst.

2. Abgasreinigungssystem für eine Verbrennungskraftmaschine (1) nach Anspruch 1, **dadurch gekennzeichnet, dass**
die Verschlechterungsgrad-Erfassungseinrichtung (10) bestimmt, dass, je größer die Temperaturänderungsweite des NOx-Speicher-Reduktionskatalysators (5) zum Zeitpunkt der intermittierenden Zugabe des Reduktionsmittels durch die Reduktionsmittel-Zugabeeinrichtung (6) ist, der Grad der Verschlechterung des Vorkatalysators (4) umso höher ist.

3. Abgasreinigungssystem für eine Verbrennungskraftmaschine (1) nach Anspruch 1 oder 2, **dadurch gekennzeichnet, dass** es weiter aufweist:
eine NOx-Reduktionssteuerungs-Ausführeinrichtung (10), welche eine NOx-Reduktionssteuerung zum Reduzieren des im NOx-Speicher-Reduktionskatalysator (5) angesammelten NOx durch intermittierendes Zuführen des Reduktionsmittels durch die Reduktionsmittel-Zugabeeinrichtung (6) ausführt; und
eine Vorkatalysator-Temperaturerhöhungseinrichtung (10), welche dazu dient, wenn die NOx-Reduktionssteuerung durch die NOx-Reduktionssteuerungs-Ausführeinrichtung (10) ausgerührt wird, die Temperatur des Vorkatalysators (4), bei einem Fall, bei dem die Temperaturänderungsweite des NOx-Speicher-Reduktionskatalysators (5) zum Zeitpunkt der intermittierenden Zugabe des Reduktionsmittels durch die Reduktionsmittel-Zugabeeinrichtung (6) gleich oder größer als eine vorbestimmte Änderungsweite ist, höher einzustellen als bei einem Fall, bei dem die Temperaturänderungsweite des NOx-Speicher-Reduktionskatalysators (5) niedriger ist als die vorbestimmte Änderungsweite.

4. Abgasreinigungssystem für eine Verbrennungskraftmaschine (1) nach Anspruch 3, **dadurch gekennzeichnet, dass**,
eine Solltemperatur zu dem Zeitpunkt, zu dem die Temperatur des Vorkatalysators (4) durch die Vorkatalysator-Temperaturerhöhungseinrichtung (10) erhöht wird, umso größer eingestellt wird, je größer die Temperaturänderungsweite des NOx-Speicher-Reduktionskatalysators (5) zum Zeitpunkt der intermittierenden Zugabe des Reduktionsmittels durch die Reduktionsmittel-Zugabeeinrichtung (6) ist.

5. Abgasreinigungssystem für eine Verbrennungskraftmaschine (1) nach Anspruch 4, **dadurch gekennzeichnet, dass**,
die Ausführung der NOx-Reduktionssteuerung durch die NOx-Reduktionssteuerungs-Ausführeinrichtung (10) verhindert wird, wenn die Solltemperatur höher als ein vorgegebener oberer Grenzwert wird.

## Revendications

1. Système de purification de gaz d'échappement pour un moteur (1) à combustion interne, comprenant :
un pot catalytique (5) de stockage-réduction de NOx qui est disposé sur un conduit (2) d'échappement du moteur (1) à combustion interne ;
un pré-pot catalytique (4) qui est disposé sur le conduit (2) d'échappement à un emplacement en amont dudit pot catalytique (5) de stockage-réduction de NOx et qui a une fonction d'oxydation ;
un moyen (9) de détection de température qui détecte la température dudit pot catalytique (5) de stockage-réduction de NOx ; et
un moyen (6) de délivrance d'agent de réduction qui délivre de façon intermittente un agent de réduction audit pré-pot catalytique (4) et audit pot catalytique (5) de stockage-réduction de NOx à partir du côté amont dudit pré-pot catalytique (4) ;
le système de purification de gaz d'échappement étant **caractérisé en ce qu'**il comprend en outre :
un moyen (10) de détection de niveau de dégradation qui détecte le niveau de dégradation dudit pré-pot catalytique (4) en se basant sur l'étendue de variation de température dudit pot catalytique (5) de stockage-réduction de NOx au moment où ledit agent de réduction est délivré de façon intermittente par ledit moyen (6) de délivrance d'agent de réduction.

2. Système de purification de gaz d'échappement pour un moteur (1) à combustion interne selon la revendication 1, **caractérisé en ce que** ledit moyen (10) de détection de niveau de dégradation détermine que plus l'étendue de variation de température dudit pot catalytique (5) de stockage-réduction de NOx au moment où l'agent de réduction est délivré de façon intermittente par ledit moyen (6) de délivrance d'agent de réduction est grande, plus le niveau de dégradation dudit pré-pot catalytique (4) est élevé.

3. Système de purification de gaz d'échappement pour un moteur (1) à combustion interne selon la revendication 1 ou 2, **caractérisé en ce qu'**il comprend :
un moyen (10) d'exécution de commande de réduction de NOx qui exécute une commande de réduction de NOx pour réduire le NOx occlus dans ledit pot catalytique (5) de stockage-réduction de NOx par délivrance de façon intermittente de l'agent de réduction à l'aide dudit moyen (6) de délivrance d'agent de réduction ; et
un moyen (10) d'élévation de température de pré-pot catalytique qui, lorsqu'une commande de réduction de NOx est effectuée par ledit moyen (10) d'exécution de commande de réduction de NOx, sert à rendre plus élevée la température dudit pré-pot catalytique (4), dans le cas où l'étendue de variation de température dudit pot catalytique (5) de stockage-réduction de NOx au moment où l'agent de réduction est délivré de façon intermittente par ledit moyen (6) de délivrance d'agent de réduction est égale ou supérieure à une étendue prédéterminée de variation, que dans le cas où l'étendue de variation de température dudit pot catalytique (5) de stockage-réduction de NOx est inférieure à ladite étendue prédéterminée de variation.

4. Système de purification de gaz d'échappement pour un moteur (1) à combustion interne selon la revendication 3, **caractérisé en ce que** plus l'étendue de variation de température dudit pot catalytique (5) de stockage-réduction de NOx au moment où l'agent de réduction est délivré de façon intermittente par ledit moyen (6) de délivrance d'agent de réduction est grande, plus on rend élevée la température cible au moment où la température dudit pré-pot catalytique (4) est élevée par ledit moyen (10) d'élévation de température de pré-pot catalytique.

5. Système de purification de gaz d'échappement pour un moteur (1) à combustion interne selon la revendication 4, **caractérisé en ce que** l'exécution de la commande de réduction de NOx par ledit moyen (10) d'exécution de commande de réduction de NOx est interdite lorsque la température cible devient plus élevée qu'une valeur prédéterminée de limite supérieure.
